# EUROPÄISCHE PATENTSCHRIFT

(11) **EP 0 612 424 B1**
(45) Veröffentlichungstag und Bekanntmachung des Hinweises auf die Patenterteilung: **27.11.1996**
(21) Anmeldenummer: 93918957.7
(22) Anmeldetag: 07.09.1993
(51) Int. Cl.: G07F 7/06, B62B 5/06

(54) **TRANSPORTWAGEN MIT EINEM MÜNZSCHLOSS**
TRANSPORT CADDIE WITH A COIN LOCK
CHARIOT MUNI D'UNE SERRURE ACTIONNEE PAR UNE PIECE DE MONNAIE

(30) Priorität: 11.09.1992 DE 4230361; 03.06.1993 DE 4318380
(43) Veröffentlichungstag der Anmeldung: 31.08.1994
(73) Patentinhaber: Wanzl GmbH & Co. Entwicklungs-KG, D-89336 Leipheim (DE)
(72) Erfinder: WANZL, Rudolf, D-89340 Leipheim (DE)
(86) Internationale Anmeldenummer: DE9300820
(87) Internationale Veröffentlichungsnummer: WO9407215

(56) Entgegenhaltungen:
- EP-A- 0 199 274
- EP-A- 0 421 101
- EP-A- 0 442 016
- WO-A-88/01084
- DE-A- 3 519 167
- DE-U- 8 811 173
- DE-U- 9 106 701
- FR-A- 2 645 306

## Beschreibung

Die Erfindung betrifft einen Transportwagen, der in einen gleichgearteten Transportwagen einschiebbar und mit einer zur Aufnahme von Ware oder Gepäck oder dergleichen vorgesehenen Einrichtung ausgestattet ist und der eine Schiebeeinrichtung in Form einer Griffstange aufweist, die von zwei Griffhalteteilen gehalten wird, welche lösbar am Transportwagen befestigt sind und wobei auf der Griffstange ein mit einer Kopplungseinrichtung ausgestattetes Münzschloß angeordnet ist, das auf Pfandbasis oder unter Verwendung eines dafür vorgesehenen Münzersatzes ein gegenseitiges An- oder Abkoppeln von Transportwagen mit oder ohne Inanspruchnahme einer Sammelstelle erlaubt.

Mit Münzschlössern ausgestattete Transportwagen, insbesondere Einkaufswagen, sind inzwischen weit verbreitet. Wagen dieser Art werden gewöhnlich auf Pfandbasis ausgeliehen. Sie lassen sich entweder untereinander an- und abkoppeln und/oder in Verbindung mit fest installierten Sammelstellen gezielt an verschiedenen Punkten sammeln und wieder ausleihen. Man will mit solchen Systemen verhindern, daß beispielsweise leere Einkaufswagen wahllos und unbenutzt auf Parkplätzen umherstehen.
Durch die europäische Patentschrift 0 199 274 ist ein Transportwagen bekannt, dessen Münzschloß im Bereich eines der beiden Grifftragarme angeordnet ist und sich sowohl am Grifftragarm als auch an der Griffstange abstützt. Diese Art der Anordnung des Münzschlosses besitzt zwei Vorteile. Im Gegensatz zu den bisher meist mittig an der Griffstange befestigten Münzschlössern ist hier das Münzschloß an einer Seite der Griffstange angeordnet, so daß es z.B. nicht störend in den Sitzbereich eines auf dem Transportwagen mitgeführten Kindes ragt. Der zweite Vorteil besteht darin, daß auf jener Seite des Transportwagens, auf der das Münzschloß angeordnet ist, eines der beiden Griffhalteteile eingespart wird. Gerade dieser Vorteil läßt jedoch einen Nachteil dann entstehen, wenn es gilt, bereits im Einsatz befindliche Transportwagen nachträglich mit derartigen Münzschlössern auszustatten. Dann nämlich fällt jenes Griffhalteteil als überflüssig an, an dessen Stelle das Münzschloß tritt. Die angefallenen Griffhalteteile lassen sich nur schlecht wiederverwerten, da sie nur stückweise und nur nach und nach als Ersatzteile für beschädigte Griffhalteteile Verwendung finden. So entstehen unnötige Lagerkosten, was meistens dazu führt, daß die abmontierten Griffhalteteile letztendlich in den Abfall wandern.

Die Aufgabe der Erfindung besteht darin, bei einem gattungsgemäßen Transportwagen Maßnahmen vorzusehen, die garantieren, daß bei nachträglicher Montage von Münzschlössern an bereits im Einsatz befindlichen Transportwagen keine "überflüssigen" Griffhalteteile mehr anfallen.

Das Wesen der Erfindung ist darin erkennbar, daß das Münzschloß unter Führung auf der Griffstange und gegen Verdrehen gesichert mit einem der beiden Griffhalteteile verrastet ist.

Der besondere Vorteil der Erfindung besteht darin, daß bei nachträglicher Montage eines Münzschlosses am Transportwagen das dem Münzschloß direkt zugeordnete Griffhalteteil nicht gegen ein neues Griffhalteteil ausgetauscht zu werden braucht. Dies wird dadurch ermöglicht, daß zumindest am betreffenden Griffhalteteil Erhöhungen oder Vertiefungen, beispielsweise Nocken, Stege, Rillen, Durchbrüche usw. vorgesehen sind, in welche entsprechend korrespondierende Vertiefungen oder Erhöhungen, die sich am Münzschloß befinden, dann eingreifen und/oder einrasten, wenn man das Münzschloß unter Führung auf der Griffstange kraftbetont auf das Griffhalteteil aufsteckt. Anstelle von Stegen und Durchbrüchen, die ein Verdrehen des Münzschlosses um die Längsachse der Griffstange verhindern, ist es auch möglich, eine Vertiefung am Münzschloß vorzusehen, die der Form des taschenförmigen, nichtzylindrischen Ansatzes jenes Griffhalteteiles entspricht, auf welches das Münzschloß aufgesteckt wird, wobei die Vertiefung des Münzschlosses einen Teil des taschenförmigen Ansatzes formschlüssig und bevorzugt auch rastschlüssig umschließt. Ein Verdrehen des Münzschlosses wird auch durch die Verwendung einer Griffstange mit einem nichtzylindrischen Querschnitt verhindert. Die aus einem Münzschloß und einem Griffhalteteil gebildete Baueinheit läßt sich verdrehsicher und ortsfest an einer Seite der Griffstange anbringen, an einer Stelle also, die sich inzwischen als äußerst zweckmäßig erwiesen hat. Um ein einheitliches Aussehen der Griffhalteteile zu garantieren, ist es von Vorteil, auch das andere Griffhalteteil in Form und Aussehen spiegelbildlich dem erstgenannten Griffhalteteil anzupassen. Vorteilhaft ist ferner, daß sich das Münzschloß und das Griffhalteteil ohne Verwendung von irgendwelchen Befestigungsteilen zusammenfügen lassen.

Die Erfindung wird anhand einiger Ausführungsbeispiele näher erläutert. Es zeigt
- Fig. 1: einen Transportwagen mit einem Münzschloß;
- Fig. 2: ein mit einem Griffhalteteil verrastetes Münzschloß, das auf einer Griffstange mit zylindrischem Querschnitt aufgesetzt ist;
- Fig. 3: eine gleiche Anordnung wie Fig. 2, wobei die Griffstange einen nichtzylindrischen Querschnitt besitzt;
- Fig. 4 und Fig. 5: ein Münzschloß, das eine formschlüssige Verbindung mit dem taschenförmigen Ansatz eines Griffhalteteiles bildet sowie
- Fig. 6 bis Fig. 8: drei Ausführungsbeispiele eines aus zwei Teilen bestehenden Münzschlosses.

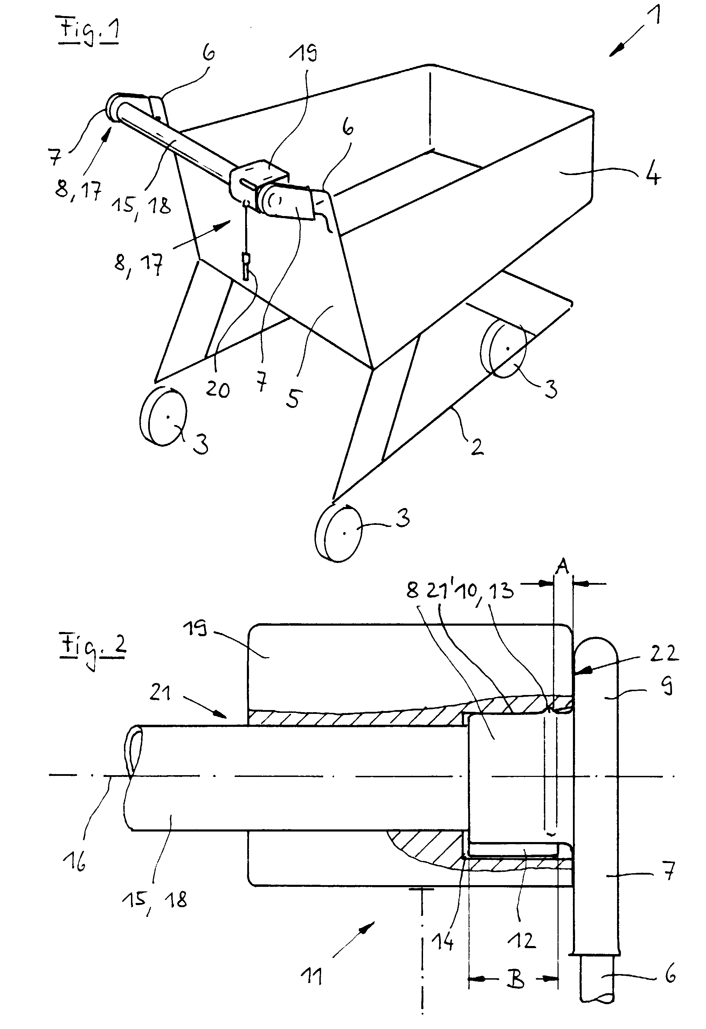

Die Erfindung schließt alle gängigen Transportwagen 1 ein, auf die sich die Erfindung anwenden läßt. Besonders dazu geeignet sind als Einkaufswagen gestaltete Transportwagen 1, die, wie in Fig. 1 gezeigt, aufgrund ihrer in Fahrtrichtung sich verjüngenden Gestalt zum Zwecke des platzsparenden Stapelns ineinanderschiebbar ausgebildet sind. Auch die bekannten Kofferkulis zählen dazu. Gewöhnlich weisen als Einkaufswagen vorgesehene Transportwagen 1 in bekannter Weise ein mit wenigstens drei Fahrrollen 3 ausgestattetes Fahrgestell 2 auf, welches einen Korb 4 trägt, der rückseitig durch eine um eine im oberen Bereich befindliche waagrechte Achse drehbare, in das Korbinnere verschwenkbare Klappe 5 begrenzt ist. Wahlweise kann die Klappe 5 mit einem ebenfalls bekannten Kindersitz ausgerüstet sein. Am oberen rückwärtigen Ende des Korbes 4 befindet sich zu beiden Seiten je ein Grifftragarm 6. Auf jedem Grifftragarm 6 ist je ein Griffhalteteil 7 in bekannter Weise gegen Lösen und Verdrehen gesichert aufgesteckt. Die Griffhalteteile 7 sind zum Tragen einer bevorzugt zylindrischen Griffstange 15 bestimmt, die mit ihren Enden 17 in je einem rohrförmigen Vorsprung 8 der Griffhalteteile 7 mündet und mit bekannten, jedoch nicht näher dargestellten Befestigungsmitteln mit den Vorsprüngen 8 verbunden sind. Bevorzugt auf der rechten Seite der so gebildeten Schiebeeinrichtung 18 ist ein Münzschloß 19 auf die Griffstange 15 aufgesetzt und mit dem in der Zeichnung rechts dargestellten Griffhalteteil 7 durch eine Rastverbindung verbunden. Das Münzschloß 19 kann im Grunde nahezu beliebig gestaltet sein. Es weist auf jeden Fall eine nicht näher dargestellte, jedoch bekannte Kopplungseinrichtung, sowie eine ebenfalls bekannte Münzeingabe- und eine Münzausgabevorrichtung auf, so daß mit einem derartigen Münzschloß 19 auf Pfandbasis oder unter Verwendung eines dafür vorgesehenen Münzersatzes ein gegenseitiges An- oder Abkoppeln von Transportwagen 1 mit oder ohne Inanspruchnahme einer Sammelstelle möglich ist. Im vorliegenden Falle sind besonders jene Münzschlösser 19 geeignet, die einen an einer Kette befindlichen Schlüssel 20 aufweisen, der zum Einführen in die Kopplungseinrichtung eines benachbarten Transportwagens 1 vorgesehen ist. Ein derartiges Münzschloß 19 ist deshalb in der Zeichnung dargestellt.

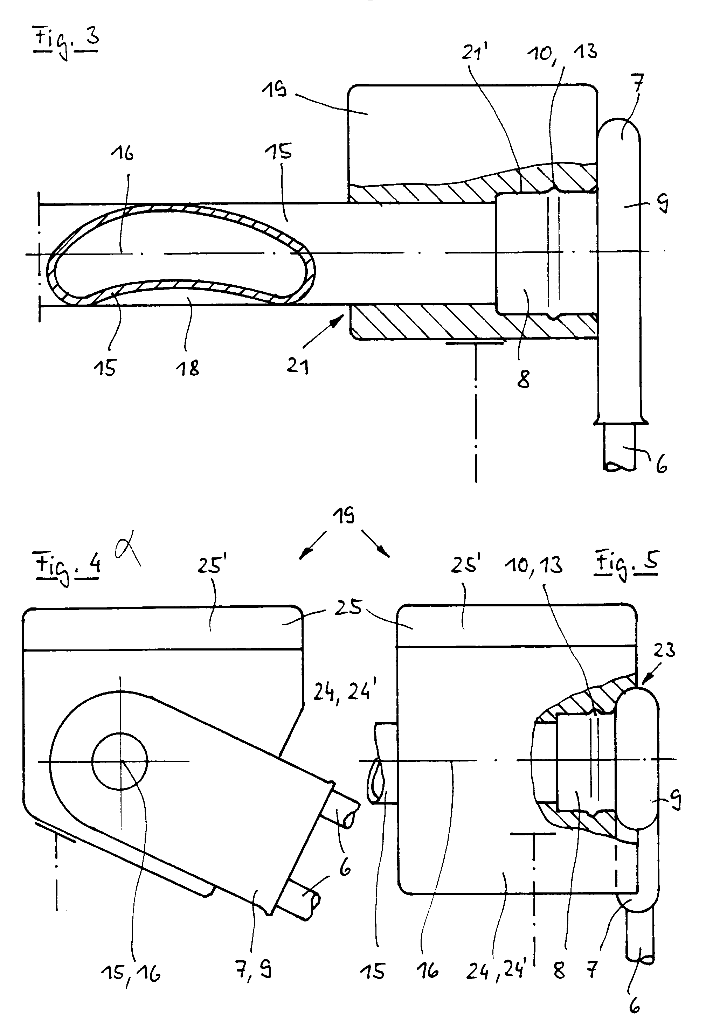

In Fig. 2 ist das rechts am Transportwagen 1 angeordnete Münzschloß 19 teilweise geschnitten dargestellt. Die Griffstange 15 mündet mit ihrem rechten Ende im rohrförmigen Vorsprung 8 des aus Kunststoff bestehenden Griffhalteteiles 7, das im Prinzip so gestaltet ist, wie jene Griffhalteteile, wie sie bei Einkaufswagen der Anmelderin seit Jahren üblich sind. Das Griffhalteteil 7 besitzt einen taschenförmigen Ansatz 9, der zur Aufnahme eines beispielsweise aus Draht gefertigten, schlaufenförmigen Grifftragarmes 6 vorgesehen ist. Zum Halten der Schiebeeinrichtung 18 sind zwei Grifftragarme 6, siehe Fig. 1, erforderlich, wobei die Grifftragarme 6 in nicht näher gezeigter Weise entweder an der zur Aufnahme von Ware vorgesehenen Einrichtung 4 -im Beispiel nach Fig. 1 ist die Einrichtung 4 ein Drahtgitterkorb- oder am Fahrgestell 2 befestigt sind. Die Art der lösbaren Befestigung der Griffhalteteile 7 an den Grifftragarmen 6 ist ebenfalls bekannt. Sie braucht hier deshalb nicht näher beschrieben zu werden. Auf dem rohrförmigen Vorsprung 8 ist nahe des Ansatzes 9 eine zumindest teilweise umlaufende Erhöhung 10 vorgesehen und im unteren Bereich 11 der zylindrischen Mantelfläche des Vorsprunges 8 ist ein Steg 12 an den Vorsprung 8 angeformt, der (12) parallel zur Längsachse 16 der Griffstange 15 verläuft. Das der Einfachheit nur in Umrissen dargestellte Münzschloß 19 ist mittels einer zentralen Öffnung 21 auf die im Beispiel zylindrische Griffstange 15 aufgeschoben. Im Bereich des Vorsprunges 8 erweitert sich die zentrale Öffnung 21 auf den Durchmesser des Vorsprunges 8. Man erkennt in der Zeichnung, daß die Erhöhung 10 in eine gleichgeartete, zumindest teilweise umlaufende Vertiefung 13, die sich im abgestuften Teil 21' der Öffnung 21 befindet, eingerastet ist. Dies bewirkt, daß das Münzschloß 19 in dieser Lage nicht entlang der Längsachse 16 der Griffstange 15 bewegbar ist. Um das Münzschloß 19 auch gegen Verdrehen zu sichern, ist an der zentralen Öffnung 21 auf Höhe des Steges 12 eine längliche, parallel zur Längsachse 16 der zentralen Öffnung 21 angeordnete Nut 14 vorgesehen, die zur formschlüssigen Aufnahme des Steges 12 des Vorsprunges 8 bestimmt ist. Es ist anzumerken, daß der von der Erhöhung 10 bis zur äußeren, am Griffhalteteil 7 anliegenden seitlichen Begrenzung 22 des Münzschlosses 19 gemessene Abstand A in zweckmäßiger Weise kleiner ist, als die Länge B des Steges 12. Durch diese konstruktive Maßnahme ist sichergestellt, daß beim Vorgang des Zusammenführens des Münzschlosses 19 und des Griffhalteteiles 7 zuerst der Steg 12 in die Nut 14 eingreift und damit das Münzschloß 19 in die verdrehsichere Lage bringt, bevor durch Eintauchen der Erhöhung 10 in die Vertiefung 13 eine Rastverbindung zwischen dem Münzschloß 19 und dem Griffhalteteil 7 hergestellt wird. In äquivalenter Weise kann der Vorsprung 8 des Griffhalteteiles 7 anstelle einer Erhöhung 10 an gleicher Stelle eine Vertiefung 13 aufweisen und die Öffnung 21 des Münzschlosses 19 an entsprechender Stelle anstatt mit einer Vertiefung 13 mit einer Erhöhung 10 ausgestattet sein. Die gleiche Umkehrung der Mittel kann zwischen dem Steg 12 und der Nut 14 erfolgen. Wesentlich bleibt, daß zwischen dem Münzschloß 19 und dem Griffhalteteil 7 eine Rastverbindung ohne Zuhilfenahme weiterer Befestigungsmittel wie Schrauben, Muttern und dgl. erzielt wird.

In Fig. 3 ist das rechts am Transportwagen 1 angeordnete Münzschloß 19 teilweise geschnitten dargestellt. Die Griffstange 15 mündet mit ihrem rechten Ende im hohlen Vorsprung 8 des aus Kunststoff bestehenden Griffhalteteiles 7, das im Prinzip so gestaltet ist, wie jene Griffhalteschalen, die beispielsweise in der EP 0 212 557 gezeigt und dort mit der Positionszahl 2 gekennzeichnet sind. Die Griffstange 15 weist demnach einen nichtzylindrischen Querschnitt auf. Wie bereits in Fig. 2 beschrieben, besitzt das Griffhalteteil 7 ebenfalls einen taschenförmigen Ansatz 9, der zur Aufnahme des beispielsweise aus Draht gefertigten schlaufenförmigen Grifftragarmes 6 vorgesehen ist. Zum Halten der Schiebeeinrichtung 18 sind wiederum zwei Grifftragarme 6 erforderlich. Auf dem hohlen Vorsprung 8 ist, wie in Fig. 2 beschrieben, nahe des Ansatzes 9 eine zumindest teilweise umlaufende Erhöhung 10 vorgesehen. Das der Einfachheit nur in Umrissen dargestellte Münzschloß 19 ist mittels einer zentralen Öffnung 21 auf die Griffstange 15 aufgeschoben. Der nichtzylindrische Querschnitt der Griffstange 15 ist anhand einer Schnittdarstellung in Fig. 2 ersichtlich, wobei die Zeichnung die innere Gestaltung des Querschnittes offen läßt. Die Griffstange 15 kann z.B. auch aus Vollmaterial gestaltet sein. Der Querschnitt besitzt in bevorzugter und in an sich bekannter Weise eine ovalähnliche Form, etwa so, wie in der EP 0 212 557 vorgeschlagen. Ein auf die Griffstange 15 aufgesetztes Münzschloß 19 läßt sich somit nicht um eine horizontale Achse 16 verdrehen, wie dies bei einer Griffstange 15 mit zylindrischem Querschnitt ohne zusätzliche Sicherung möglich wäre. Im Bereich des hohlen Vorsprunges 8 erweitert sich die zentrale Öffnung auf den Umriss des hohlen Vorsprunges 8. Dadurch läßt sich das Münzschloß 19 auch auf den Vorsprung 8 aufschieben. Man erkennt in der Zeichnung, daß die Erhöhung 10 in eine gleichgeartete, zumindest teilweise umlaufende Vertiefung 13, die sich im erweiterten Teil 21' der Öffnung 21 befindet, eingerastet ist. Dies bewirkt, daß das Münzschloß 19 in dieser Lage nicht entlang der Längsachse 16 der Griffstange 15 bewegbar ist.
In äquivalenter Weise kann der Vorsprung 8 des Griffhalteteiles 7 anstelle einer Erhöhung 10 an gleicher Stelle eine Vertiefung 13 aufweisen und die Öffnung 21 des Münzschlosses 19 kann an entsprechender Stelle anstatt mit einer Vertiefung 13 mit einer Erhöhung 10 ausgestattet sein.

Bei dem in den Figuren 4 und 5 in zwei Ansichten dargestellten Münzschloß 19 wird ein Verdrehen des Münzschlosses 19 um die Längsachse 16 einer zylindrischen Griffstange 15 dadurch verhindert, daß das Münzschloß 19 eine Vertiefung 23 aufweist, die in montiertem Zustand des Münzschlosses 19 einen Teil des nichtzylindrischen taschenförmigen Ansatzes 9 des Griffhalteteiles 7 formschlüssig aufnimmt. Ein Verschieben des Münzschlosses 19 entlang der Längsachse 16 der Griffstange 15 wird dadurch verhindert, daß, wie in Fig. 2 und 3 beschrieben, auf dem rohrförmigen Vorsprung 8 des Griffhalteteiles 7 beispielsweise eine zumindest teilweise umlaufende Erhöhung 10 vorgesehen ist, die in eine am Münzschloß 19 entsprechend gestaltete Vertiefung 13 eingreift. Man erkennt in den Zeichnungen einen Teil eines Grifftragarmes 6, das Griffhalteteil 7 mit Vorsprung 8 und taschenförmigem Ansatz 9, sowie einen Teil der Griffstange 15. Im Beispiel weist das Münzschloß 19 ein als Unterteil 24 gestaltetes Gehäuse 24' auf, das mit einem als Oberteil 25 ausgebildeten Deckel 25' verschließbar ist, wobei lediglich das Gehäuse 24' mit der Griffstange 15 und mit dem Griffhalteteil 7 so verbunden ist, wie dies eingangs bei einem einteiligen Münzschloß 19 bereits ausführlich beschrieben worden ist.

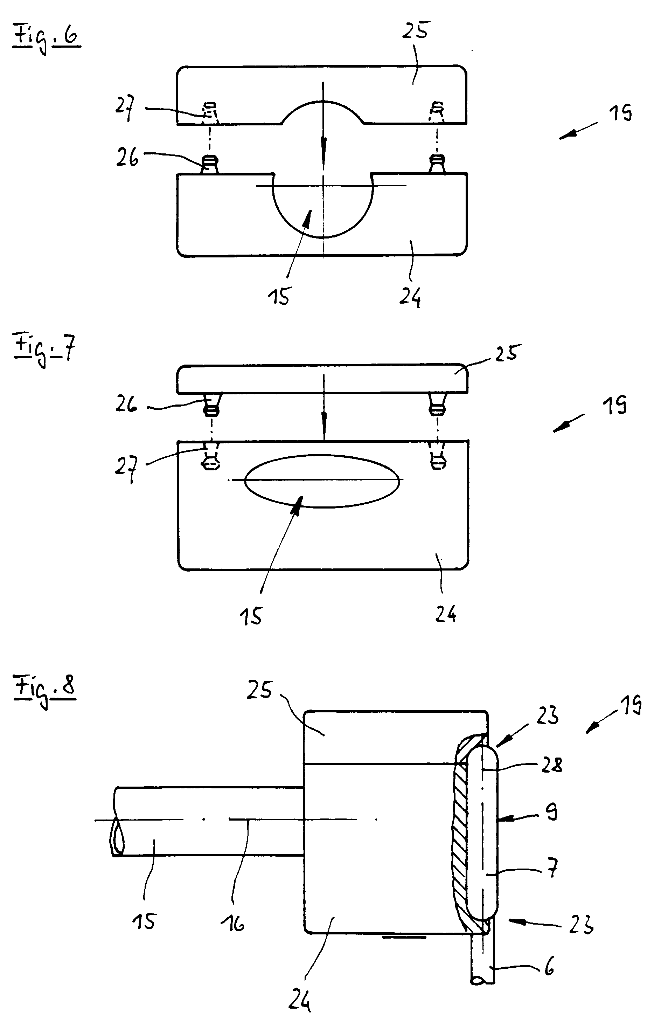

Wie bereits erwähnt, kann das Münzschloß 19 aus einem Unterteil 24 und einem Oberteil 25 gestaltet sein, wobei dieses Merkmal auch auf die Ausführungsbeispiele gemäß Fig. 2 und 3 übertragbar ist. So zeigen die Figuren 6 und 7 zwei Münzschlösser 19, die an unterschiedlich gestalteten Griffstangen 15 befestigbar sind. Beide Münzschlösser 19 weisen an ihren Unter- und Oberteilen 24, 25 mit Hinterschneidungen ausgestattete Zapfen 26 und Vertiefungen 27 auf, die maßlich so aufeinander abgestimmt sind, daß sich ein Unter- und ein Oberteil 24, 25 schnappschlüssig zu einem Münzschloß 19 vereinigen lassen. Bei dem in Fig. 6 gezeigten Ausführungsbeispiel umschließen das Unterteil 24 und das Oberteil 25 jeweils für sich betrachtet, nur teilweise die Griffstange 15, während bei dem in Fig. 7 gezeigten Ausführungsbeispiel die Griffstange 15 komplett im Unterteil 24 geführt wird. Die in den Zeichnungen eingezeichneten Pfeile zeigen den Vorgang des Zusammenfügens eines Unterteils 24 mit einem Oberteil 25.

In Fig. 8 ist ein Münzschloß 19 gezeigt, welches Merkmale aufweist, die in den Ausführungsbeispielen gemäß den Figuren 2 bis 7 bereits beschrieben worden sind. Man erkennt in der Zeichnung das aus einem Unterteil 24 und aus einem Oberteil 25 bestehende Münzschloß 19. Abgebildet sind ferner ein Teil der Griffstange 15 und ein Teil eines Grifftragarmes 6, sowie der taschenförmige Ansatz 9 eines Griffhalteteiles 7. Sowohl das Unterteil 24, als auch das Oberteil 25 weisen eine Vertiefung 23 auf. Beide Vertiefungen 23 sind zur formschlüssigen Aufnahme eines Teils des Ansatzes 9 des Griffhalteteiles 7 bestimmt, wobei zumindest die Vertiefung 23 des Unterteiles 24, oder die Vertiefung 23 des Oberteiles 25, oder beide Vertiefungen 23 so ausgebildet sind, daß sie die Kontur 28 (strichpunktiert gezeichnete senkrechte Linie) des taschenförmigen Ansatzes 9 zumindest teilweise hintergreifen. Durch diese Maßnahme läßt sich nicht nur eine formschlüssige, sondern auch eine schnappschlüssige Verbindung des Münzschlosses 19 mit dem taschenförmigen Ansatz 9 des Griffhalteteiles 7 herstellen. Dies ist von entscheidendem Vorteil, da lediglich die Form des Münzschlosses 19 auf das Griffhalteteil 7 abgestimmt werden muß. Das Griffhalteteil 7 bleibt unverändert. Damit lassen sich Transportwagen 1 nachträglich mit Münzschlössern 19 ausstatten, ohne daß irgendwelche Änderungen an den Griffhalteteilen 7 oder gar Auswechslungen von Griffhalteteilen 7 vorzunehmen sind. Anhand der römischen Zahlen I und II sowie der eingezeichneten Pfeile läßt sich die Montage dieses zweigeteilten Münzschlosses 19 beschreiben. Das Unterteil 24 des Münzschlosses 19, dessen Öffnung 21 im Querschnitt so gestaltet ist, daß diese (21) in Längsrichtung der Griffstange 15 betrachtet die Griffstange 15 gerade so umschließt, daß es nicht von der Griffstange 15 herabfallen kann, wird schnappschlüssig auf die Griffstange 15 aufgesetzt und (I) in Pfeilrichtung in der Zeichnung nach rechts unter Führung auf der Griffstange 15 so weit bewegt, bis die Vertiefung 23 des Unterteiles 24 eine form- und rastschlüssige Verbindung mit dem Ansatz 9 des Griffhalteteiles 7 eingenommen hat. In dieser Lage läßt sich das Unterteil 24 nicht mehr um die Längsachse 16 oder entlang der Längsachse 16 der Griffstange 15 bewegen oder verschieben. Das Unterteil 24 nimmt eine ortsfeste Lage ein. Anschließend (II) wird das Oberteil 25 des Münzschlosses 19 von oben her auf das Unterteil 24 schnappschlüssig aufgesetzt, so daß beide Teile 24, 25 fest miteinander verbunden sind, wobei die Vertiefung 23 des Oberteiles 25 so gestaltet ist, daß diese zumindest formschlüssig, wenn möglich oder erforderlich auch schnappschlüssig, mit einem Teil des Ansatzes 9 verbunden ist. Das so gestaltete Münzschloß 19 läßt sich auf Griffstangen 15 mit oder ohne zylindrischen Querschnitt aufsetzen.

Es bleibt abschließend festzuhalten, daß die eben beschriebenen Ausführungsbeispiele nur einen Teil jener Lösungen darstellen, die im Sinne der Erfindung insgesamt möglich sind. Allein die Tatsache, daß die Griffhalteteile 7 in Form und Aussehen durchaus unterschiedlich gestaltbar sind, erlaubt es die Erfindung, verschiedene konstruktive Wege zu beschreiben. So besteht z.B. ein weiterer derartiger Weg darin, daß die gegen Verschieben entlang der Längsachse 16 der Griffstange 15 gewählte und z.B. in Fig. 2 beschriebene Lösung weiterhin beibehalten wird. Um aber das auf der Griffstange 15 befindliche Münzschloß 19 gegen Verdrehen zu sichern, ist es möglich, z.B. an der Unterseite des Münzschlosses 19 einen nach unten gerichteten Vorsprung vorzusehen, von dem ein horizontal sich erstreckender Zapfen zum Griffhalteteil 7 gerichtet ist, wobei der Zapfen in einen entsprechend gestalteten, am Griffhalteteil 7 im Bereich des Ansatzes 9 befindlichen Durchbruch unter Führung des Münzschlosses 19 auf der Griffstange 15 bevorzugt formschlüssig eingreift. Der Zapfen kann aber auch direkt an die seitliche Begrenzung 22 des Münzschlosses 19 angeformt sein. Schließlich ist es sogar möglich, auf die in Fig. 2 beschriebene Erhöhung 10 und Vertiefung 13 ganz zu verzichten und dafür an dem eben genannten Zapfen eine ringförmige Hinterschneidung anzuformen, die den im Bereich des Ansatzes des Griffhalteteiles 7 befindlichen Durchbruch bei gleichzeitiger Führung des Münzschlosses 19 auf der Griffstange 15 schnapp- oder rastschlüssig hintergreift. Durch diese einfache Maßnahme ist es möglich, das Münzschloß 19 mit Hilfe eines Zapfens und eines Durchbruches sowohl gegen axiales Verschieben, als auch gegen Verdrehen zu sichern. Die Erfindung überläßt es dem Fachmann, in welcher Weise er die vorab vorgeschlagenen Lösungsmerkmale zum rastschlüssigen Verbinden des Münzschlosses 19 mit dem Griffhalteteil 7 kombiniert.

## Patentansprüche

1. Transportwagen (1), der in einen gleichgearteten Transportwagen einschiebbar und mit einer zur Aufnahme von Ware oder Gepäck oder dergleichen vorgesehenen Einrichtung (4) ausgestattet ist und der eine Schiebeeinrichtung in Form einer Griffstange (15) aufweist, die von zwei Griffhalteteilen (7) gehalten wird, welche lösbar am Transportwagen befestigt sind und wobei auf der Griffstange ein mit einer Kopplungseinrichtung ausgestattetes Münzschloß (19) angeordnet ist, das auf Pfandbasis oder unter Verwendung eines dafür vorgesehenen Münzersatzes ein gegenseitiges An- oder Abkoppeln von Transportwagen mit oder ohne Inanspruchnahme einer Sammelstelle erlaubt, dadurch **gekennzeichnet,** daß das Münzschloß (19) unter Führung auf der Griffstange (15) und gegen Verdrehen gesichert, mit einem der beiden Griffhalteteile (7) verrastet ist.

2. Transportwagen nach Anspruch 1, dadurch **gekennzeichnet,** daß zumindest das mit dem Münzschloß (19) verbundene Griffhalteteil (7) mit einem Vorsprung (8) ausgestattet ist, der eine Erhöhung (10) aufweist, die in eine am Münzschloß (19) entsprechend angeordnete Vertiefung (13) eingreift.

3. Transportwagen nach Anspruch 2, dadurch **gekennzeichnet,** daß die Erhöhung (10) und die Vertiefung (13) zumindest teilweise umlaufend gestaltet sind.

4. Transportwagen nach einem der Ansprüche 1 bis 3, dadurch **gekennzeichnet,** daß am Vorsprung (8) des Griffhalteteiles (7) ein parallel zur Längsachse (16) der Griffstange (15) angeordneter Steg (12) vorgesehen ist, der in eine in gleicher Richtung angeordnete, am Münzschloß (19) befindliche Nut (14) eingreift.

5. Transportwagen nach einem der Ansprüche 1 bis 3, dadurch **gekennzeichnet,** daß am Münzschloß (19) ein horizontal sich erstreckender Zapfen angeformt ist, der zum Eingreifen in einen am Griffhalteteil (7) befindlichen Durchbruch bestimmt ist.

6. Transportwagen nach einem der Ansprüche 1 bis 5, dadurch **gekennzeichnet,** daß am Münzschloß (19) ein horizontal sich erstreckender Zapfen angeformt ist, der mit einer Hinterschneidung ausgestattet, zum Hintergreifen eines am Griffhalteteil (7) befindlichen Durchbruches bestimmt ist.

7. Transportwagen nach einem der Ansprüche 1 bis 6, dadurch **gekennzeichnet,** daß das Münzschloß (19) eine Vertiefung (23) zur formschlüssigen Aufnahme eines Teils des taschenförmigen Ansatzes (9) des Griffhalteteiles (7) aufweist.

8. Transportwagen nach einem der Ansprüche 1 bis 6, dadurch **gekennzeichnet,** daß das Münzschloß (19) eine Vertiefung zur form- und rastschlüssigen Aufnahme eines Teils des taschenförmigen Ansatzes (9) des Griffhalteteiles (7) aufweist.

9. Transportwagen nach einem der Ansprüche 1 bis 8, dadurch **gekennzeichnet,** daß das Münzschloß (19) aus einem Unterteil (24) und aus einem Oberteil (25) besteht, die schnappschlüssig miteinander verbindbar sind.

10. Transportwagen nach einem der Ansprüche 1 bis 9, dadurch **gekennzeichnet,** daß das Unterteil (24) die Griffstange (15) teilweise umschließt.

11. Transportwagen nach einem der Ansprüche 1 bis 10, dadurch **gekennzeichnet,** daß das Oberteil (25) die Griffstange (15) teilweise umschließt.

12. Transportwagen nach einem der Ansprüche 1 bis 9, dadurch **gekennzeichnet,** daß das Unterteil (24) die Griffstange (15) komplett umschließt.

13. Transportwagen nach einem der Ansprüche 1 bis 12, dadurch **gekennzeichnet,** daß das Unterteil (24) und das Oberteil (25) je eine Vertiefung (23) aufweisen.

14. Transportwagen nach einem der Ansprüche 1 bis 13, dadurch **gekennzeichnet,** daß zumindest das Unterteil (24) unter Führung auf der Griffstange (15) zur schnappschlüssigen Verbindung mit dem Griffhalteteil (7) ausgebildet ist.

15. Transportwagen nach einem der Ansprüche 1 bis 14, dadurch **gekennzeichnet,** daß das Oberteil (25) ebenfalls zur schnappschlüssigen Verbindung mit dem Ansatz (9) des Griffhalteteiles (7) ausgebildet ist.

## Claims

1. A trolley (1), pushable into a trolley of the same type and provided with an arrangement (4) for holding goods or luggage or the like and having a pushing arrangement in the form of a handlebar (15) held by two holding members (7) detachably fixed to the trolley, wherein a coin lock (19), provided with a coupling arrangement, is arranged on the handlebar and enables trolleys to be coupled together or uncoupled from each other, with or without the requirement for a collection point, by means of a deposit system or using a token provided therefor, characterised in that the coin lock (19), being mounted on the handlebar (15) and secured against rotation, is fixed to one of the two holding members (7).

2. A trolley according to claim 1, characterised in that at least the holding member (7) connected to the coin lock (19) is provided with a shoulder (8) having a projection (10) engaging in a recess (13) correspondingly arranged in the coin lock (19).

3. A trolley according to claim 2, characterised in that the projection (10) and the recess (13) are formed at least partially circumferentially.

4. A trolley according to any one of claims 1 to 3, characterised in that a rib (12), arranged parallel to the longitudinal axis (16) of the handlebar (15), is provided on the shoulder (8) of the holding member (7) and engages in a groove (14) arranged in the same direction and provided in the coin lock (19).

5. A trolley according to any one of claims 1 to 3, characterised in that a horizontally extending pin is formed on the coin lock (19) for engaging in an opening in the holding member (7).

6. A trolley according to any one of claims 1 to 5, characterised in that a horizontally extending pin is formed on the coin lock (19) and is provided with an undercut for engaging behind an opening in the holding member (7).

7. A trolley according to any one of claims 1 to 6, characterised in that the coin lock (19) has a recess (23) for holding part of a pocket-shaped attachment (9) of the holding member (7) in a positive-locking manner.

8. A trolley according to any one of claims 1 to 6, characterised in that the coin lock (19) has a recess for holding part of the pocket-shaped attachment (9) of the holding member (7) in a positive-locking and snap-locking manner.

9. A trolley according to any one of claims 1 to 8, characterised in that the coin lock (19) comprises a lower part (24) and an upper part (25) interconnectable in a snap-locking manner.

10. A trolley according to any one of claims 1 to 9, characterised in that the lower part (24) partially surrounds the handlebar (15).

11. A trolley according to any one of claims 1 to 10, characterised in that the upper part (25) partially surrounds the handlebar (15).

12. A trolley according to any one of claims 1 to 9, characterised in that the lower part (24) completely surrounds the handlebar (15).

13. A trolley according to any one of claims 1 to 12, characterised in that the lower part (24) and the upper part (25) each have a recess (23).

14. A trolley according to any one of claims 1 to 13, characterised in that at least the lower part (24), being guided on the handlebar (15), is formed so as to be connected in a snap-locking manner to the holding member (7).

15. A trolley according to any one of claims 1 to 14, characterised in that the upper part (25) is also formed so as to be connected in a snap-locking manner to the attachment (9) of the holding member (7).

## Revendications

1. Chariot (1) emboîtable dans un chariot de même type, muni d'un dispositif (4) pour recevoir des marchandises, des bagages ou analogues et présentant un dispositif de poussée sous la forme d'une barre de maniement (15) tenue par deux pièces de maintien de barre (7) fixées amovibles au chariot, avec disposition sur la barre de maniement d'une serrure à monnaie (19) équipée d'un dispositif d'attelage qui, sur la base d'un prêt sur gage ou par l'emploi d'un jeton prévu dans ce but, permet l'attelage mutuel ou le dételage de chariots, avec ou sans utilisation d'un point de rassemblement, **caractérisé** en ce que la serrure à monnaie (19), en étant guidée sur la barre de maniement (15) et empêchée de tourner, est assemblée à cran avec l'une des deux pièces de maintien de barre (7).

2. Chariot selon la revendication 1, **caractérisé** en ce qu'au moins la pièce de maintien de barre (7) reliée à la serrure à monnaie (19) est munie d'une saillie (8) qui présente une surélévation (10) pénétrant dans un creux (13) agencé de façon correspondante sur la serrure à monnaie (19).

3. Chariot selon la revendication 2, **caractérisé** en ce que la surélévation (10) et le creux (13) sont conformés pour s'étendre au moins en partie autour de la périphérie.

4. Chariot selon une des revendications 1 à 3, **caractérisé** en ce que la saillie (8) de la pièce de maintien de barre est pourvue d'une nervure (12) s'étendant parallèlement à l'axe longitudinal (16) de la barre de maniement (15) et pénétrant dans une rainure (14) agencée dans la même direction sur la serrure à monnaie (19).

5. Chariot selon une des revendications 1 à 3, **caractérisé** en ce qu'un tenon s'étendant horizontalement est formé sur la serrure à monnaie (19) et destiné à pénétrer dans un évidement de la pièce de maintien de barre (7).

6. Chariot selon une des revendications 1 à 5, **caractérisé** en ce qu'un tenon s'étendant horizontalement est formé sur la serrure à monnaie (19) et pourvu d'un élargissement pour s'accrocher dans un évidement de la pièce de maintien de barre (7).

7. Chariot selon une des revendications 1 à 6, **caractérisé** en ce que la serrure à monnnaie (19) présente un creux (23) pour la réception à complémentarité de formes d'une partie de l'appendice (9) en forme de poche de la pièce de maintien de barre (7).

8. Chariot selon une des revendications 1 à 6, **caractérisé** en ce que la serrure à monnaie (19) présente un creux pour la réception à complémentarité de formes et avec assemblage à cran d'une partie de l'appendice (9) en forme de poche de la pièce de maintien de barre (7).

9. Chariot selon une des revendications 1 à 8, **caractérisé** en ce que la serrure à monnaie (19) est composée d'une partie inférieure (24) et d'une partie supérieure (25) qui peuvent être assemblées entre elles avec encliquetage.

10. Chariot selon une des revendications 1 à 9, **caractérisé** en ce que la partie inférieure (24) entoure partiellement la barre de maniement (15).

11. Chariot selon une des revendications 1 à 10, **caractérisé** en ce que la partie supérieure (25) entoure partiellement la barre de maniement (15).

12. Chariot selon une des revendications 1 à 9, **caractérisé** en ce que la partie inférieure (24) entoure complètement la barre de maniement (15).

13. Chariot selon une des revendications 1 à 12, **caractérisé** en ce que la partie inférieure (24) et la partie supérieure (25) présentent chacune un creux (23).

14. Chariot selon une des revendications 1 à 13, **caractérisé** en ce qu'au moins la partie inférieure (24) est réalisée pour être assemblée avec encliquetage avec la pièce de maintien de barre (7) tout en étant guidée sur la barre de maniement (15).

15. Chariot selon une des revendications 1 à 14, **caractérisé** en ce que la partie supérieure (25) est également réalisée pour être assemblée avec encliquetage avec l'appendice (9) de la pièce de maintien de barre (7).
